(19) Europäisches Patentamt
European Patent Office
Office européen des brevets

(11) **EP 4 299 257 A1**

(12) **EUROPEAN PATENT APPLICATION**

(43) Date of publication:
**03.01.2024 Bulletin 2024/01**

(21) Application number: **22216954.2**

(22) Date of filing: **28.12.2022**

(51) International Patent Classification (IPC):
**B25J 9/16** (2006.01)      **B62D 57/032** (2006.01)
**B62D 57/02** (2006.01)

(52) Cooperative Patent Classification (CPC):
**B25J 9/1664; B62D 57/032; B25J 9/1602;**
G05D 2201/0217

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.06.2022 CN 202210771292**

(71) Applicant: **Beijing Xiaomi Robot Technology Co.,
Ltd.**
**Beijing 100176 (CN)**

(72) Inventor: **XIE, Yan**
**Beijing, 100085 (CN)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

(54) **POSTURE CONTROL METHOD AND APPARATUS, ROBOT, STORAGE MEDIUM AND PROGRAM PRODUCT**

(57) In a posture control method for a legged robot, target posture data of the legged robot is acquired, where the target posture data is posture data corresponding to a target posture to which the legged robot needs to be adjusted; plantar force information of the legged robot is determined according to the target posture data, with a friction cone formed between the legged robot and a contact surface in contact with a foot of the legged robot as a constraint condition; and the constraint condition of the friction cone is introduced, the slippage of the legged robot is reduced, and the legged robot is stably controlled to be adjusted from a current posture to the target posture according to the plantar force information.

EP 4 299 257 A1

**Description**

**TECHNICAL FIELD**

The present invention relates to the field of robot controlling technology, and more particularly to a posture control method and apparatus, a robot, a storage medium and a program product.

**BACKGROUND**

In recent years, through social and scientific progress, robot technology is being widely used in all aspects of life However, functional requirements for robots are also increasing. Legged robots have become a research hotspot in the robot technology due to their excellent motion performance and bionic characteristics.

Legged robots can adjust the position and posture of legs by using a redundant degree of freedom of the legs to maintain their own balance, so as to adapt to complex terrains. For legged robots, apart from adapting to complex terrains, they are also expected to complete certain specific tasks in complex conditions, for example, observing terrains through a vision sensor mounted on a torso of the legged robot. This may require that the legged robot can control the posture of the torso by coordinating degrees of freedom of the legs, to allow the sensor to observe more comprehensive information.

At present, in a posture control method for a legged robot, it is easy to slippage to occur between the legged robot and its contact surface, which affects normal movement of the legged robot.

**SUMMARY**

It is the object of the present invention to provide a posture control method and apparatus, a robot, a storage medium and a program product, to at least solve the problem that the existing legged robot is prone to slippage, which affects the normal movement of the legged robot.

This object is achieved by a posture central method according to claim 1, a robot according to claim 12, a computer-readable storage medium according to claim 14 and a computer program product according to claim 15.

The technical solutions of the present invention are as follows.

The present invention provides a posture control method, which is applied to a legged robot. The posture control method includes: acquiring target posture data of the legged robot, in which the target posture data is posture data corresponding to a target posture to which the legged robot needs to be adjusted; determining plantar force information of the legged robot according to the target posture data, with a friction cone formed between the legged robot and a contact surface in contact with a foot of the legged robot as a constraint condition; and controlling the legged robot to be adjusted from a current posture to the target posture according to the plantar force information.

Optionally, the plantar force information includes a plantar force and a plantar force variation. Determining plantar force information of the legged robot according to the target posture data with a friction cone formed between the legged robot and a contact surface in contact with a foot of the legged robot as a constraint condition includes: determining the plantar force of the legged robot according to the target posture data, with the friction cone formed between the legged robot and the contact surface in contact with the foot of the legged robot as the constraint condition; and determining the plantar force variation according to differences between the target posture data and actual posture data.

Optionally, determining the plantar force of the legged robot according to the target posture data with the friction cone formed between the legged robot and the contact surface in contact with the foot of the legged robot as the constraint condition includes: constructing a dynamic model according to the target posture data; constructing a quadratic optimization relationship, with a minimum plantar force as an optimization objective and in combination with the dynamic model and the constraint condition of the friction cone; and determining the plantar force of the legged robot according to the quadratic optimization relationship.

Optionally, the differences include a centroid position error, a centroid velocity error, a torso posture error, and a torso angular velocity error. Determining the plantar force variation according to differences between the target posture data and actual posture data includes: linearizing the dynamic model and obtaining a linearized dynamic model, according to the centroid position error, the centroid velocity error, the torso posture error, the torso angular velocity error and an initial plantar force variation; constructing a linear quadratic adjustment relationship, with a minimum plantar force variation as an objective and in combination with the linearized dynamic model; and determining the plantar force variation according to the quadratic adjustment relationship.

Optionally, controlling the legged robot to be adjusted from a current posture to the target posture according to the plantar force information includes: optimizing the plantar force information according to a linearized dynamic model and obtaining optimized plantar force information, with the friction cone formed between the legged robot and the contact surface in contact with the foot of the legged robot as the constraint condition; determining a joint torque of each joint of the legged robot according to the optimized plantar force information; and controlling the legged robot to be adjusted from the current posture to the target posture according to the joint torque.

Optionally, the plantar force information includes a plantar force and a plantar force variation. Optimizing the plantar force information according to a linearized dynamic model and obtaining optimized plantar force information with the friction cone formed between the legged robot and the contact surface in contact with the foot of the legged robot as the constraint condition, includes: optimizing the plantar force variation and obtaining an optimized plantar force variation, with a plantar force variation of a current control cycle and a plantar force variation of a previous control cycle as objectives and with the constraint condition of the friction cone and the linearized dynamic model as constraints; and obtaining the optimized plantar force information according to the optimized plantar force variation and the plantar force.

Optionally, determining a joint torque of each joint of the legged robot according to the optimized plantar force information includes: determining the joint torque of each joint of the legged robot according to the optimized plantar force information and a gravitational torque.

Optionally, the target posture data includes posture angles, and the posture angles include: a heading angle, a pitch angle, and a roll angle in a world coordinate system.

Optionally, a reference angular velocity of the legged robot is calculated according to the posture angles.

Optionally, the target posture data includes position coordinates, and the position coordinates refer to offset in three degrees of freedom in a world coordinate system.

Optionally, a reference acceleration of a center of mass of the legged robot is calculated according to the position coordinates.

The present invention further provides a posture control apparatus for a robot. The posture control apparatus includes: an acquisition module configured to acquire target posture data of a legged robot, in which the target posture data is posture data corresponding to a target posture to which the legged robot needs to be adjusted; a determination module configured to determine plantar force information of the legged robot according to the target posture data, with a friction cone formed between the legged robot and a contact surface in contact with a foot of the legged robot as a constraint condition; and a control module configured to control the legged robot to be adjusted from a current posture to the target posture according to the plantar force information.

Optionally, the plantar force information includes a plantar force and a plantar force variation. The determination module includes: a first determination sub-module configured to determine the plantar force of the legged robot according to the target posture data, with the friction cone formed between the legged robot and the contact surface in contact with the foot of the legged robot as the constraint condition; and a second determination sub-module configured to determine the plantar force variation according to differences between the target posture data and actual posture data.

Optionally, in response to determining the plantar force of the legged robot according to the target posture data, with the friction cone formed between the legged robot and the contact surface in contact with the foot of the legged robot as the constraint condition, the first determination sub-module is configured to: construct a dynamic model according to the target posture data; construct a quadratic optimization relationship, with a minimum plantar force as an optimization objective and in combination with the dynamic model and the constraint condition of the friction cone; and determine the plantar force of the legged robot according to the quadratic optimization relationship.

Optionally, the differences include a centroid position error, a centroid velocity error, a torso posture error, and a torso angular velocity error. In response to determining the plantar force variation according to differences between the target posture data and actual posture data, the second determination sub-module is configured to: linearize the dynamic model and obtaining a linearized dynamic model, according to the centroid position error, the centroid velocity error, the torso posture error, the torso angular velocity error and an initial plantar force variation; construct a linear quadratic adjustment relationship, with a minimum plantar force variation as an objective and in combination with the linearized dynamic model; and determine the plantar force variation according to the quadratic adjustment relationship.

Optionally, the control module includes: an optimization sub-module configured to optimize the plantar force information according to a linearized dynamic model and obtain optimized plantar force information, with the friction cone formed between the legged robot and the contact surface in contact with the foot of the legged robot as the constraint condition; a third determination sub-module configured to determine a joint torque of each joint of the legged robot according to the optimized plantar force information; and a control sub-module configured to control the legged robot to be adjusted from the current posture to the target posture according to the joint torque.

Optionally, the plantar force information includes a plantar force and a plantar force variation. In response to optimizing the plantar force information according to a linearized dynamic model and obtaining optimized plantar force information with the friction cone formed between the legged robot and the contact surface in contact with the foot of the legged robot as the constraint condition, the optimization sub-module is configured to: optimize the plantar force variation and obtain an optimized plantar force variation, with a plantar force variation of a current control cycle and a plantar force variation of a previous control cycle as objectives and with the constraint condition of the friction cone and the linearized dynamic model as constraints; and obtain the optimized plantar force information according to the optimized plantar force variation and the plantar force.

Optionally, in response to determining a joint torque of each joint of the legged robot according to the optimized plantar force information, the third determination sub-module is configured to: determine the joint torque of each joint of the legged robot according to the optimized plantar force information and a gravitational torque.

The present invention further provides a robot, including: a processor; and a memory configured to store instructions executable by the processor, in which the processor is configured to execute the instructions to implement various steps of the above method.

The present invention further provides a computer-readable storage medium, in which instructions in the computer-readable storage medium are configured to enable a computer to implement various steps of the above method.

The present invention also provides a computer program product including a computer program/instruction, in which various steps of the above method are implemented in response to executing the computer program by a processor.

The technical solutions according to the embodiments of the present invention at least have the following beneficial effects.

In some embodiments of the present invention, the target posture data of the legged robot is acquired, and the target posture data is posture data corresponding to the target posture to which the legged robot needs to be adjusted; the plantar force information of the legged robot is determined according to the target posture data, with the friction cone formed between the legged robot and the contact surface in contact with the foot of the legged robot as the constraint condition; and the constraint condition of the friction cone is introduced, the slippage of the legged robot is reduced, and the legged robot is stably controlled to be adjusted from the current posture to the target posture according to the plantar force information.

It should be understood that the above general description and the following detailed description are merely exemplary and explanatory and are not intended to limit the present invention.

## BRIEF DESCRIPTION OF DRAWINGS

The accompanying drawings, which are incorporated into and constitute a part of this specification, illustrate embodiments consistent with the present invention and, together with the specification, serve to explain the principles of the present invention rather than limit the present invention improperly.

Fig. 1 is a schematic view of an application scenario of a robot posture control method in the related art;
Fig. 2 is a flowchart of a posture control method according to some embodiments of the present invention;
Fig. 3 is a flowchart of another posture control method according to some embodiments of the present invention;
Fig. 4a is a schematic view of a posture control apparatus according to some embodiments of the present invention;
Fig. 4b is a schematic view of a determination module according to some embodiments of the present invention;
Fig. 4c is a schematic view of a control module according to some embodiments of the present invention;
Fig. 5 is a schematic view of a legged robot according to some embodiments of the present invention.

## DETAILED DESCRIPTION

To enable those skilled in the art to better understand the technical solutions of the present invention, the technical solutions in embodiments of the present invention will be described clearly and completely below with reference to the accompanying drawings.

It should be noted that terms such as "first" and "second" in the specification and claims of the present invention and in the foregoing drawings are used for distinguishing between similar objects and not necessarily for describing a particular sequential or chronological order. It should be understood that data thus used is interchangeable in proper circumstances, such that embodiments of the present invention described herein can be implemented in orders other than the orders illustrated or described herein. The implementations described in the following exemplary embodiments do not represent all possible implementations consistent with the present invention. Instead, they are merely examples of an apparatus and a method consistent with some aspects of the present invention as recited in the appended claims.

It should be noted that in the present invention, user information involved in the present invention includes but is not limited to: user equipment information and user personal information; and the collection, storage, use, processing, transmission, provision and disclosure of the user information in the present invention comply with relevant laws and regulations and do not violate public order and good customs.

In recent years, with the social and scientific progress, robot technology has been widely used in all aspects of life, but functional requirements for robots are also increasing. Legged robots have become a research hotspot in the robot technology due to the excellent motion performance and bionic characteristics.

Legged robots can adjust the position and posture of legs by using a redundant degree of freedom of the legs to maintain their own balance, so as to adapt to complex terrains. For the legged robots, apart from adapting to complex terrains, the legged robots are expected to complete certain specific tasks in complex conditions, for example, observing terrains through a vision sensor mounted on a torso of the legged robot, which requires that the legged robot can control the posture of the torso by coordinating degrees of freedom of the legs, to allow the sensor to observe more comprehensive information.

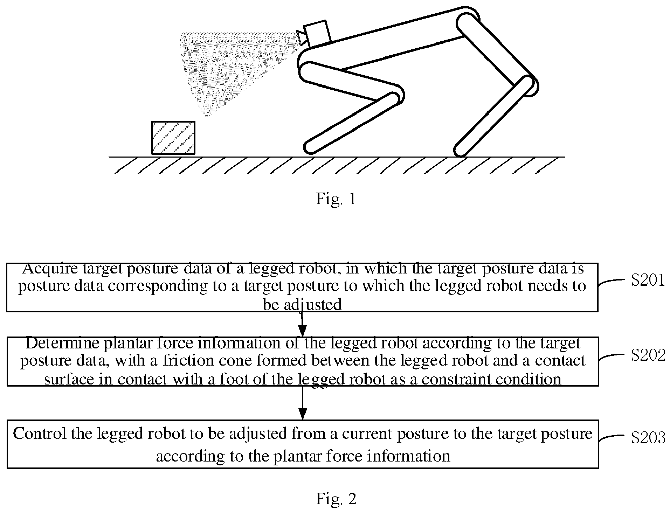

Fig. 1 is a schematic view of an application scenario of a robot posture control method in the related art.

As shown in Fig. 1, a four-legged robot is taken as an example. When the robot conducts reconnaissance operations outdoors, it is often necessary to control a posture of a torso to adjust a viewing angle of a camera (mounted on the torso), so as to obtain more comprehensive terrain or obstacle information. A user needs to send instructions to the robot through a remote controller. After receiving the instructions, the robot controls all joints to move cooperatively, and controls a torso posture to achieve a posture desired by the user with a fast response speed, high precision and strong stability, so as to ensure that image information obtained by the camera is timely, stable and multi-directional.

At present, methods for controlling postures of legged robots are mainly divided into position control and torque control. The joints of the traditional legged robots adopt harmonic reducers with large reduction ratio, and this kind of reducer has large friction torque and poor reverse drive performance, and generally works in position control mode. Consequently, the posture control of such robots controls joint positions of the legs through posture errors and kinematics models of the legged robots. However, this position control mode has slow response and poor robustness, and it is difficult to achieve high dynamic posture control.

In a posture control method for a legged robot in the related art, according to contact between robot legs and a support plane, an equation of the support plane in the world coordinate system at the current moment is calculated by coordinates of each joint of the robot legs in the world coordinate system; according to the equation of the support surface in the world coordinate system, an expected trajectory of a posture angle of the four-legged robot is calculated; according to the expected trajectory of the posture angle of the four-legged robot, a torque of each joint is obtained, and the posture control of the four-legged robot is realized. In this posture control method, the contact between a plantar surface of the legged robot and the ground is not considered, and the joint torque obtained may break the friction cone constraint, causing the plantar surface of the robot to slide relative to the ground, and resulting in poor workspace control and robustness; and the joint torque obtained ignores the mass of the legs, resulting in the lack of corresponding gravity compensation in the joint torque, which may reduce a joint response speed.

At present, in the posture control method for the legged robot, it is easy for slippage to occur between the legged robot and its contact surface, which affects normal movement of the legged robot.

The technical solutions according to some embodiments of the present invention will be explained below in detail with reference to the drawings.

Fig. 2 shows a flowchart of a posture control method according to some embodiments of the present invention. As shown in Fig. 2, the method includes: step S201: acquiring target posture data of a legged robot, in which the target posture data is posture data corresponding to a target posture to which the legged robot needs to be adjusted; step S202: determining plantar force information of the legged robot according to the target posture data, with a friction cone formed between the legged robot and a contact surface in contact with a foot of the legged robot as a constraint condition; and step S203: controlling the legged robot to be adjusted from a current posture to the target posture according to the plantar force information.

In embodiments of the present invention, an execution subject of the above posture control method is the legged robot, and the type of the legged robot is not limited and may be adjusted according to actual situations. The legged robot may be, for example, a two-legged robot or a four-legged robot.

It should be noted that the target posture data includes three posture angles and position coordinates. The posture angles include: a heading angle, a pitch angle, and a roll angle in the world coordinate system. The position coordinates refer to the offset in three degrees of freedom in the world coordinate system.

It should be noted that the friction cone refers to a cone surface formed by rotating with a common normal as an axis, and when there is friction, constraint force of the support surface on the balanced object includes normal constraint force and tangential constraint force. The friction cone is a cone with a vertex angle of 2*arctan($\mu$), in which $\mu$ represents a friction coefficient ranging from 0 to 1.

In the embodiments of the present invention, the legged robot acquires the target posture data, and the target posture data is the posture data corresponding to the target posture to which the legged robot needs to be adjusted; the plantar force information of the legged robot is determined according to the target posture data, with the friction cone formed between the legged robot and the contact surface in contact with the foot of the legged robot as the constraint condition; and the constraint condition of the friction cone is introduced, the slippage of the legged robot is reduced, and the legged robot is stably controlled to be adjusted from the current posture to the target posture according to the plantar force information.

In some embodiments of the present invention, the target posture data of the legged robot is acquired. One possible implementation includes: sending a control instruction to the legged robot in response to the user's triggering operation on an operation key of a control device, in which the target posture data is carried in the control instruction;

and receiving the target posture data by the legged robot. Another possible implementation is that the legged robot generates a control instruction carrying the target posture data, in response to an operation of the user's voice input of posture data. Another possible implementation is that the legged robot recognizes a target posture image and obtains the target posture data in response to an operation of the user's input of the target posture image, and generates a control instruction carrying the target posture data.

In the above and following embodiments of the present invention, the plantar force information may include a plantar force and a plantar force variation. The friction cone formed between the legged robot and the contact surface in contact with the foot of the legged robot is used as the constraint condition to reduce the slippage between the robot and the contact surface, which is hereinafter referred to as a friction cone constraint condition.

In some embodiments of the present invention, the plantar force information of the legged robot is determined according to the target posture data with the friction cone formed between the legged robot and the contact surface in contact with the foot of the legged robot as the constraint condition. A possible implementation includes: determining the plantar force of the legged robot according to the target posture data, with the friction cone formed between the legged robot and the contact surface in contact with the foot of the legged robot as the constraint condition; and determining the plantar force variation according to differences between the target posture data and actual posture data. Embodiments of the present invention controls the posture of the legged robot by the plantar force and the plantar force variation, and the accuracy of posture control is improved.

In an optional embodiment, the plantar force of the legged robot is determined according to the target posture data with the friction cone formed between the legged robot and the contact surface in contact with the foot of the legged robot as the constraint condition. A possible implementation includes: constructing a dynamic model according to the target posture data; constructing a quadratic optimization relationship, with a minimum plantar force as an optimization objective and in combination with the dynamic model and the friction cone constraint condition; and determining the plantar force of the legged robot according to the quadratic optimization relationship. The dynamic model is constructed according to the target posture data; a quadratic optimization equation is constructed, with the minimum plantar force as the optimization objective and in combination with the dynamic model and the friction cone constraint condition; and the quadratic optimization equation is solved to obtain the plantar force of the legged robot. Since the present invention constructs the dynamic model and the friction cone constraint condition as a quadratic optimization problem, the slippage between the legged robot and its contact surface is reduced.

For example, in an example of a four-legged robot, if the mass of legs of the four-legged robot is ignored, the four-legged robot can be equivalent to a single rigid body model. According to the target posture data, a dynamic model is constructed and may be expressed as:

$$\begin{bmatrix} I_3 & I_3 & I_3 & I_3 \\ \hat{r}_1^d & \hat{r}_2^d & \hat{r}_3^d & \hat{r}_4^d \end{bmatrix} u^d = \begin{bmatrix} m\left( \ddot{p}^d + g \right) \\ I_g \dot{\omega}^d + \hat{\omega}^d I_g \omega^d \end{bmatrix}$$

in which $I_3$ is a unit matrix with dimensions of $3\times3$; $r_i^d$ is a reference position vector from a foot end of the $i^{th}$ leg of the four-legged robot to a centroid thereof; $\hat{r}_i^d$ is an antisymmetric matrix of the reference position vector from the foot end of the $i^{th}$ leg of the four-legged robot to the centroid thereof; $m$ is the robot's own weight; $g$ is an acceleration of gravity; $\ddot{p}^d$ is a reference acceleration of the robot centroid; $I_g$ is an inertia of the robot; $\omega^d$ is a reference angular velocity of a robot torso; $\dot{\omega}^d$ is a reference angular acceleration of the robot torso; $\hat{\omega}^d$ is an antisymmetric matrix of the reference angular velocity of the robot torso.

According to the three posture angles of the four-legged robot, the reference angular velocity $\omega^d$ of the robot torso is calculated; and according to the position coordinates of the four-legged robot, the reference acceleration of the robot centroid $\ddot{p}^d$ is calculated.

The relationship between the reference position vector $r_i^d$ from the foot end of the $i^{th}$ leg of the four-legged robot to the centroid thereof and the antisymmetric matrix $\hat{r}_i^d$ of the reference position vector from the foot end of the $i^{th}$ leg of the four-legged robot to the centroid thereof is as follows:

$$r_i^d = \begin{bmatrix} r_{i,x}^d \\ r_{i,y}^d \\ r_{i,z}^d \end{bmatrix}, \hat{r}_i^d = \begin{bmatrix} 0 & -r_{i,z}^d & r_{i,y}^d \\ r_{i,z}^d & 0 & -r_{i,x}^d \\ -r_{i,y}^d & r_{i,x}^d & 0 \end{bmatrix}$$

The plantar force at an end of each leg of the four-legged robot is expressed as follows:

$$u^d = \begin{bmatrix} f_1^d \\ f_2^d \\ f_3^d \\ f_4^d \end{bmatrix}$$

in which $f_i^d$ is the plantar force of the $i^{th}$ leg of the robot.

Apart from satisfying the above dynamic model, the four-legged robot also needs to satisfy the friction cone constraint, that is, the plantar force cannot exceed a friction cone range of plantar contact, to ensure no relative slide between the plantar surface and the contact surface. The friction cone constraint condition is expressed as follows:

$$\underline{d} \le Cu^d \le \overline{d}$$

in which C is a constraint matrix with dimensions of 20×12, $\underline{d}$ is a constraint vector lower limit, and $\overline{d}$ is a constraint vector upper limit, which are specifically expressed as follows:

$$C = \begin{bmatrix} C_1 & 0 & 0 & 0 \\ 0 & C_1 & 0 & 0 \\ 0 & 0 & C_1 & 0 \\ 0 & 0 & 0 & C_1 \end{bmatrix}, C_1 = \begin{bmatrix} 1 & 0 & -\mu \\ 0 & 1 & -\mu \\ 1 & 0 & \mu \\ 0 & 1 & \mu \\ 0 & 0 & 1 \end{bmatrix}, \underline{d} = \begin{bmatrix} \underline{d_1} \\ \underline{d_1} \\ \underline{d_1} \\ \underline{d_1} \end{bmatrix}, \underline{d_1} = \begin{bmatrix} -\infty \\ -\infty \\ 0 \\ 0 \\ 0 \end{bmatrix}, \overline{d} = \begin{bmatrix} \overline{d_1} \\ \overline{d_1} \\ \overline{d_1} \\ \overline{d_1} \end{bmatrix}, \overline{d_1} = \begin{bmatrix} 0 \\ 0 \\ +\infty \\ +\infty \\ +\infty \end{bmatrix}$$

The quadratic optimization equation is constructed, with the minimum plantar force as the optimization objective and in combination with the dynamic model and the friction cone constraint condition:

$$\min_{u^d} \left( H^d u^d - b^d \right) S \left( H^d u^d - b^d \right)$$

$$s.t. \quad \underline{d} \le Cu^d \le \overline{d}$$

in which S is a weight matrix with dimensions of 6×6. An optimal plantar force of the legged robot is obtained by solving the quadratic optimization equation.

In another optional embodiment, the plantar force variation is determined according to the differences between the target posture data and the actual posture data. The differences include a centroid position error, a centroid velocity error, a torso posture error, and a torso angular velocity error. A possible implementation includes: linearizing the dynamic model and obtaining a linearized dynamic model, according to the centroid position error, the centroid velocity error, the torso posture error, the torso angular velocity error and an initial plantar force variation; constructing a linear quadratic adjustment relationship, with a minimum plantar force variation as an objective and in combination with the linearized dynamic model; and determining the plantar force variation according to the quadratic adjustment relationship. The dynamic model is linearized according to the centroid position error, the centroid velocity error, the torso posture error, the torso angular velocity error and the initial plantar force variation, to obtain the linearized dynamic model; a linear quadratic adjustment equation is constructed with the minimum plantar force variation as the objective and in combination with the linearized dynamic model; the linear quadratic adjustment equation is solved to obtain the plantar force variation. The present invention employs an optimal control theory and performs linear quadratic adjustment on the linearized dynamic model, to ensure that the joint torque finally obtained is optimal and improves the robustness of posture control.

For example, when an actual trajectory of the legged robot deviates from a reference trajectory corresponding to the target posture, the robot can better follow the target posture by correcting the plantar force of the robot, and an error between the actual trajectory and the reference trajectory can be reduced.

A Jacobian linearization method is used to linearize the above dynamic model, to obtain the linearized dynamic model of the robot:

$$\delta \dot{x} = A\delta x + B\delta u$$

in which

$$\delta x = \begin{bmatrix} \delta p_c \\ \delta \dot{p}_c \\ {}^B\eta \\ \delta {}^B\omega \end{bmatrix}$$

is a state quantity of the robot, and the four states are the centroid position error, the centroid velocity error, the torso posture error and the torso angular velocity error from top to bottom;

$$\delta u = \begin{bmatrix} \delta f_1 \\ \delta f_2 \\ \delta f_3 \\ \delta f_4 \end{bmatrix}$$

is the plantar force variation of the robot;

$$A = \begin{bmatrix} 0_3 & I_3 & 0_3 & 0_3 \\ 0_3 & 0_3 & 0_3 & 0_3 \\ 0_3 & 0_3 & -{}^B\hat{\omega}^d & I_3 \\ {}^BI^{-1}\left(R_b^d\right)^T \sum \widehat{f_i^d} & 0_3 & {}^BI^{-1}\left(R_b^d\right)^T \sum \widehat{\tau_i^d} & {}^BI^{-1}\left(\widehat{{}^BI\,{}^B\omega^d} - \widehat{{}^B\omega^d}\,{}^BI\right) \end{bmatrix}$$

is a system matrix of the dynamic model;

$$B = \begin{bmatrix} 0_3 & \cdots & 0_3 \\ \dfrac{I_3}{m} & \cdots & \dfrac{I_3}{m} \\ 0_3 & \cdots & 0_3 \\ {}^BI^{-1}\left(R_b^d\right)^T \hat{r}_1^d & \cdots & {}^BI^{-1}\left(R_b^d\right)^T \hat{r}_4^d \end{bmatrix}$$

is an input matrix of the dynamic model. According to the above linearized dynamic model, the optimal control theory is used to design a controller, and the state of the robot is controlled by controlling the plantar force variation.

With the minimum plantar force variation as the objective and in combination with the linearized dynamic model, the linear quadratic adjustment equation is constructed as follows:

$$\min_{\delta u} \quad J = \int_0^{\infty} \left[ \delta x^T Q \delta x + \delta u^T R \delta u \right] dt$$

$$s.t. \quad \delta \dot{x} = A \delta x + B \delta u$$

in which $J$ is a cost function, and $Q$, $R$ is a positive semi-definite or positive definite matrix.

The linear quadratic adjustment equation is solved to obtain an optimal plantar force variation $\delta u^*_{LQR}$.

Specifically, based on the above linear quadratic adjustment equation, the optimal plantar force variation $\delta u^*_{LQR}$ can be deduced:

$$\delta u^*_{LQR} = -K \delta x = -R^{-1} B^T S \delta x$$

in which $K = R^{-1}B^T S$ is a feedback gain, $S$ is a specific positive semi-definite matrix, and it can be obtained by solving the following Riccati equation:

$$0 = Q - SBR^{-1}B^T S + SA + A^T S.$$

In the above embodiment, the legged robot is controlled to be adjusted from the current posture to the target posture according to the plantar force information. A possible implementation includes: optimizing the plantar force information according to a linearized dynamic model and obtaining optimized plantar force information, with the friction cone formed between the legged robot and the contact surface in contact with the foot of the legged robot as the constraint condition; determining a joint torque of each joint of the legged robot according to the optimized plantar force information; and controlling the legged robot to be adjusted from the current posture to the target posture according to the joint torque.

In an embodiment, according to a situation of friction between the legged robot and the contact surface in contact with the legged robot and the linearized dynamic model, the plantar force information is optimized, and the optimized plantar force information is obtained. A possible implementation includes: optimizing the plantar force variation and obtaining an optimized plantar force variation, with a plantar force variation of a current control cycle and a plantar force variation of a previous control cycle as objectives and with the friction cone constraint condition and the linearized dynamic model as constraints; and obtaining the optimized plantar force information according to the optimized plantar force variation and the plantar force.

For example, the plantar force information of the robot includes two parts

$$u = u^d + \delta u^*_{LQR},$$

in which $u^d$ is the plantar force of the robot, and $\delta u^*_{LQR}$ is the plantar force variation of the robot.

Since the friction cone constraint is not considered in the calculation of the above plantar force variation, the plantar force information calculated by the above formula may not meet the friction cone constraint. Consequently, the friction cone constraint is used to optimize the plantar force information, and the optimized plantar force information is obtained, so that the posture of the legged robot can be adjusted more accurately.

The plantar force variation $\delta u$ is selected as an optimization variable. The cost function has two parts: one part is that the plantar force variation to be optimized $\delta u$ should be as close as possible to the optimal plantar force variation

$\delta u^*_{LQR}$ ; and the other part is that the plantar force variation to be optimized $\delta u$ should be as close as possible to the plantar force variation $\delta u^*_{prev}$ of the previous control cycle. The plantar force variation to be optimized $\delta u$ should satisfy the linearized dynamic model, and the final plantar force control quantity $u^d + \delta u$ should meet the friction cone constraint:

$$\min_{\delta u}\left(\delta u - \delta u^*\right)^T R\left(\delta u - \delta u^*\right) + \left(\delta u - \delta u^*_{prev}\right)^T Q\left(\delta u - \delta u^*_{prev}\right)$$

$$s.t.\ \ \delta \dot{x} = A\delta x + B\delta u$$

$$\underline{d} \le C\left(u^d + \delta u\right) \le \bar{d}$$

the optimal plantar force variation $\delta u^*$ is calculated; according to the optimized plantar force variation and the plantar force, the final plantar force information is ($u^d + \delta u^*$).

In another embodiment, the joint torque of each joint of the legged robot is determined according to the optimized plantar force information. A possible implementation is that the joint torque of each joint of the legged robot is calculated according to the optimized plantar force information and a gravitational torque. Optionally, the joint torque of each joint of the legged robot is calculated according to a Jacobian matrix, the optimized plantar force information and the gravitational torque. During calculation of the joint torque, the gravitational torque is added to improve the response speed of the joint, and the posture control effect of the legged robot is enhanced.

For example, a derivation process of a calculation formula for each joint of the legged robot is described below.

The weight of four legs of the four-legged robot is ignored, and the relationship between a joint torque of the ith leg of the robot and the plantar force can be described by Jacobi

$$\tau_i = J_i^T f_i\ ;$$

the joint torque generated by the weight of the four legs of the robot at each joint of the robot can be calculated by a full dynamic equation of the robot, and the full dynamic equation is as follows:

$$M\ddot{q} + C + G = \tau$$

in which $M$ is a mass inertia matrix with dimensions of 18×18; $\ddot{q}$ is a joint acceleration with dimensions of 18×1, the first six dimensions representing accelerations of six joints with a floating base, and the latter twelve dimensions representing accelerations of twelve drivable joints of the robot; $C$ is a vector with dimensions of 18×1 and represents Coriolis force and centrifugal force generated by a robot joint movement; and $G$ is a vector with dimensions of 18×1 and represents the gravitational torque generated by gravity of the robot.

When the robot is stationary, the torque at each joint of the robot is equal to the gravitational torque, i.e.,

$$\tau = G = \begin{bmatrix} \tau_{g,fb} \\ \tau_{g,1} \\ \tau_{g,2} \\ \tau_{g,3} \\ \tau_{g,4} \end{bmatrix},$$

finally, the calculation formula of the joint torque of the $i^{th}$ leg of the robot is as follows:

$$\tau_i = J_i^T f_i + \tau_{g,i}.$$

In the above embodiments, the legged robot is controlled to be adjusted from the current posture to the target posture quickly according to the joint torque of each joint of the legged robot, so as to carry out subsequent operations, for example, capturing environmental images.

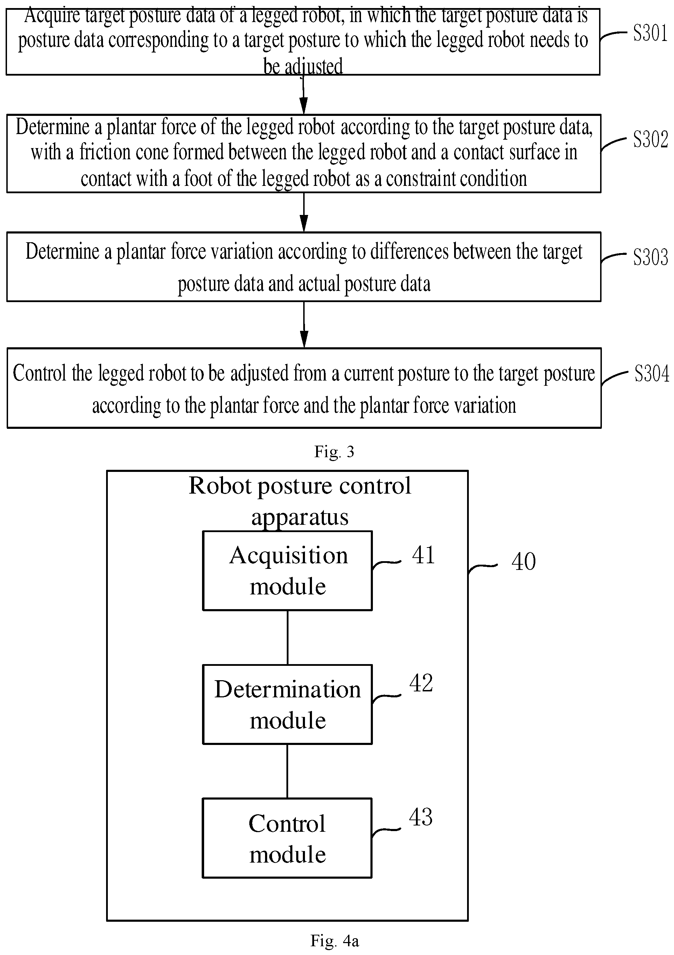

In combination with the description of the above embodiments, Fig. 3 is a flowchart of another posture control method for a robot according to some embodiments of the present invention. As shown in Fig. 3, in step S301, target posture data of a legged robot is acquired, and the target posture data is posture data corresponding to a target posture to which the legged robot needs to be adjusted; in step S302, a plantar force of the legged robot is determined according to the target posture data, with a friction cone formed between the legged robot and a contact surface in contact with a foot of the legged robot as a constraint condition; in step S303, a plantar force variation is determined according to differences between the target posture data and actual posture data; and in step S304, the legged robot is controlled to be adjusted from a current posture to the target posture according to the plantar force and the plantar force variation.

In the embodiments of the present invention, an execution subject of the above posture control method is the legged robot, and the type of the legged robot is not limited and may be adjusted according to actual situations. The legged robot may be, for example, a two-legged robot or a four-legged robot.

In the embodiments of the present invention, each step of the posture control method for the robot can refer to the description of corresponding parts of the above embodiments. Accordingly, the beneficial effects of the corresponding parts of the above embodiments can also be obtained, which will not be repeated here.

In the above method embodiments of the present invention, the target posture data of the legged robot is acquired, and the target posture data is the posture data corresponding to the target posture to which the legged robot needs to be adjusted; the plantar force information of the legged robot is determined according to the target posture data, with the friction cone formed between the legged robot and the contact surface in contact with the foot of the legged robot as the constraint condition; and the constraint condition of the friction cone is introduced, the slippage of the legged robot is reduced, and the legged robot is stably controlled to be adjusted from the current posture to the target posture according to the plantar force information.

Fig. 4a is a schematic view of a posture control apparatus 40 according to some embodiments of the present invention. As shown in Fig. 4a, the posture control apparatus 40 includes an acquisition module 41, a determination module 42 and a control module 43.

The acquisition module 41 is configured to acquire target posture data of a legged robot, in which the target posture data is posture data corresponding to a target posture to which the legged robot needs to be adjusted. The determination module 42 is configured to determine plantar force information of the legged robot according to the target posture data, with a friction cone formed between the legged robot and a contact surface in contact with a foot of the legged robot as a constraint condition. The control module 43 is configured to control the legged robot to be adjusted from a current posture to the target posture according to the plantar force information.

Optionally, the plantar force information includes a plantar force and a plantar force variation.

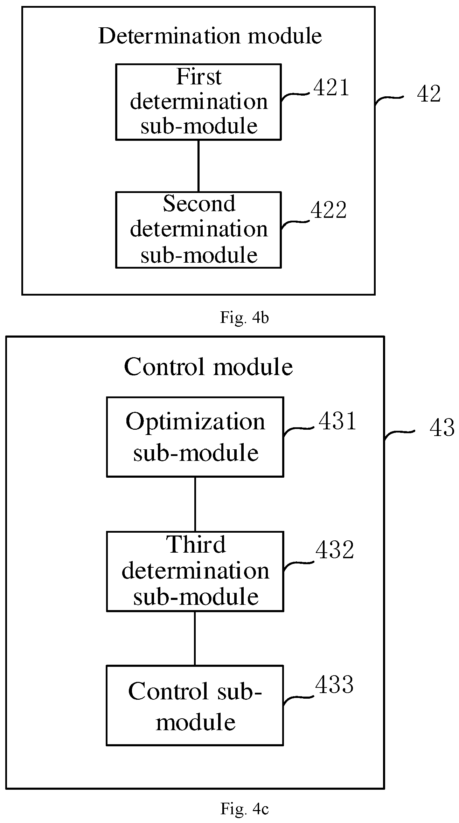

Fig. 4b is a schematic view of the determination module 42 according to some embodiments of the present invention. The determination module 42 includes a first determination sub-module 421 and a second determination sub-module 422.

The first determination sub-module 421 is configured to determine the plantar force of the legged robot according to the target posture data, with the friction cone formed between the legged robot and the contact surface in contact with the foot of the legged robot as the constraint condition. The second determination sub-module 422 is configured to determine the plantar force variation according to differences between the target posture data and actual posture data.

Optionally, when the plantar force of the legged robot is determined according to the target posture data, with the friction cone formed between the legged robot and the contact surface in contact with the foot of the legged robot as the constraint condition, the first determination sub-module 421 is configured to: construct a dynamic model according to the target posture data; construct a quadratic optimization relationship, with a minimum plantar force as an optimization objective and in combination with the dynamic model and the constraint condition of the friction cone; and determine the plantar force of the legged robot according to the quadratic optimization relationship.

Optionally, the differences include a centroid position error, a centroid velocity error, a torso posture error, and a torso angular velocity error. When the plantar force variation is determined according to the differences between the target posture data and the actual posture data, the second determination sub-module 422 is configured to: linearize the dynamic model and obtain a linearized dynamic model, according to the centroid position error, the centroid velocity error, the torso posture error, the torso angular velocity error and an initial plantar force variation; construct a linear quadratic adjustment relationship, with a minimum plantar force variation as an objective and in combination with the linearized dynamic model; and determine the plantar force variation according to the quadratic adjustment relationship.

Optionally, Fig. 4c is a schematic view of the control module 43 according to some embodiments of the present invention. As shown in Fig. 4c, the control module 43 includes an optimization sub-module 431, a third determination sub-module 432 and a control sub-module 433.

The optimization sub-module 431 is configured to optimize the plantar force information according to a linearized dynamic model and obtain optimized plantar force information, with the friction cone formed between the legged robot and the contact surface in contact with the foot of the legged robot as the constraint condition. The third determination sub-module 432 is configured to determine a joint torque of each joint of the legged robot according to the optimized plantar force information. The control sub-module 433 is configured to control the legged robot to be adjusted from the current posture to the target posture according to the joint torque.

Optionally, the plantar force information includes a plantar force and a plantar force variation. When the plantar force information is optimized according to a linearized dynamic model and the optimized plantar force information is obtained with the friction cone formed between the legged robot and the contact surface in contact with the foot of the legged robot as the constraint condition, the optimization sub-module 431 is configured to: optimize the plantar force variation and obtain an optimized plantar force variation, with a plantar force variation of a current control cycle and a plantar force variation of a previous control cycle as objectives and with the constraint condition of the friction cone and the linearized dynamic model as constraints; and obtain the optimized plantar force information according to the optimized plantar force variation and the plantar force.

Optionally, when the joint torque of each joint of the legged robot is determined according to the optimized plantar force information, the third determination sub-module 432 is configured to: determine the joint torque of each joint of the legged robot according to the optimized plantar force information and a gravitational torque.

With respect to the apparatus in the above embodiments, specific modes of various modules to perform operations have been described in detail in the method embodiments and will not be described in detail here.

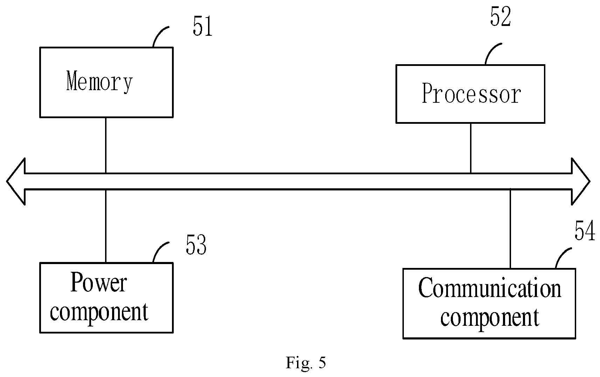

Fig. 5 is a schematic view of a legged robot according to some embodiments of the present invention. As shown in Fig. 5, the legged robot includes: a memory 51 and a processor 52. In addition, the legged robot further includes a power component 53 and a communication component 54.

The memory 51 is used to store computer programs and can be configured to store various other data to support operations on the legged robot. Examples of such data include instructions for any application or method for operations on the legged robot.

The memory 51 can be realized by any type of volatile or nonvolatile storage device or their combination, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The communication component 54 is used for data transmission with other devices.

The processor 52 can execute computer instructions stored in the memory 51, to acquire target posture data of the legged robot, in which the target posture data is posture data corresponding to a target posture to which the legged robot needs to be adjusted; determine plantar force information of the legged robot according to the target posture data, with a friction cone formed between the legged robot and a contact surface in contact with a foot of the legged robot as a constraint condition; and control the legged robot to be adjusted from a current posture to the target posture according to the plantar force information.

Optionally, the plantar force information includes a plantar force and a plantar force variation. When the plantar force information of the legged robot is determined according to the target posture data with the friction cone formed between the legged robot and the contact surface in contact with the foot of the legged robot as the constraint condition, the processor 52 is configured to determine the plantar force of the legged robot according to the target posture data, with the friction cone formed between the legged robot and the contact surface in contact with the foot of the legged robot as the constraint condition; and determine the plantar force variation according to differences between the target posture data and actual posture data.

When the plantar force of the legged robot is determined according to the target posture data with the friction cone formed between the legged robot and the contact surface in contact with the foot of the legged robot as the constraint condition, the processor 52 is configured to construct a dynamic model according to the target posture data; construct a quadratic optimization relationship, with a minimum plantar force as an optimization objective and in combination with the dynamic model and the constraint condition of the friction cone; and determine the plantar force of the legged robot according to the quadratic optimization relationship.

Optionally, the differences include a centroid position error, a centroid velocity error, a torso posture error, and a torso angular velocity error. When the plantar force variation is determined according to the differences between the target posture data and the actual posture data, the processor 52 is configured to linearize the dynamic model and obtain a linearized dynamic model, according to the centroid position error, the centroid velocity error, the torso posture error, the torso angular velocity error and an initial plantar force variation; construct a linear quadratic adjustment relationship, with a minimum plantar force variation as an objective and in combination with the linearized dynamic model; and determine the plantar force variation according to the quadratic adjustment relationship.

Optionally, when the legged robot is controlled to be adjusted from the current posture to the target posture according to the plantar force information, the processor 52 is configured to optimize the plantar force information according to a linearized dynamic model and obtain optimized plantar force information, with the friction cone formed between the legged robot and the contact surface in contact with the foot of the legged robot as the constraint condition; determine a joint torque of each joint of the legged robot according to the optimized plantar force information; and control the legged robot to be adjusted from the current posture to the target posture according to the joint torque.

Optionally, the plantar force information includes a plantar force and a plantar force variation. When the plantar force information is optimized according to the linearized dynamic model and the optimized plantar force information is obtained with the friction cone formed between the legged robot and the contact surface in contact with the foot of the legged robot as the constraint condition, the processor 52 is configured to optimize the plantar force variation and obtain an optimized plantar force variation, with a plantar force variation of a current control cycle and a plantar force variation of a previous control cycle as objectives and with the constraint condition of the friction cone and the linearized dynamic model as constraints; and obtain the optimized plantar force information according to the optimized plantar force variation and the plantar force.

Optionally, when the joint torque of each joint of the legged robot is determined according to the optimized plantar force information, the processor 52 is configured to determine the joint torque of each joint of the legged robot according to the optimized plantar force information and a gravitational torque.

Correspondingly, embodiments of the present invention also provide a computer-readable storage medium in which a computer program is stored. When the computer-readable storage medium stores the computer program and the computer program is executed by one or more processors, one or more processors perform various steps in the method embodiment as shown in Fig. 2.

Correspondingly, embodiments of the present invention also provide a computer program product that includes a computer program/instruction, and the computer program/instruction is executed by a processor to perform various steps in the method embodiment as shown in Fig. 2.

The communication component in Fig. 5 is configured to facilitate wired or wireless communication between the device where the communication component is located and other devices. A device where the communication component is located can access wireless networks based on communication standards, such as Wi-Fi, 2G, 3G, 4G/LTE, 5G and other mobile communication networks, or their combination. In an exemplary embodiment, the communication component receives a broadcast signal or broadcast related information from an external broadcast management system via a broadcast channel. In an exemplary embodiment, the communication component further includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

The power component in Fig. 5 provides power for various components of the device where the power component is located. The power component can include a power management system, one or more power supplies, and other components associated with generating, managing, and distributing power for the device where the power supply components are located.

The legged robot also includes a display screen and an audio component.

The display screen includes a display screen, which may include a liquid crystal display (LCD) and a touch panel (TP). If the screen includes a touch panel, the screen may be implemented as a touch screen to receive an input signal from a user. The touch panel includes one or more touch sensors to sense touch, sliding and gestures on the touch panel. The touch sensor can not only sense the boundary of a touch or slide action, but also detect the duration and pressure associated with the touch or slide action.

The audio component can be configured to output and/or input audio signals. For example, the audio component includes a microphone (MIC), which is configured to receive external audio signals when the device in which the audio component is located is in an operation mode, such as a call mode, a recording mode and a voice recognition mode. The received audio signal may be further stored in the memory or transmitted via the communication component. In some embodiments, the audio component also includes a speaker for outputting audio signals.

In the above embodiments of the apparatus, the robot, the storage medium and the computer program product of the present invention, the target posture data of the legged robot is acquired, and the target posture data is posture data corresponding to the target posture to which the legged robot needs to be adjusted; the plantar force information of the legged robot is determined according to the target posture data, with the friction cone formed between the legged robot and the contact surface in contact with the foot of the legged robot as the constraint condition; and the constraint condition of the friction cone is introduced, the slippage of the legged robot is reduced, and the legged robot is stably controlled to be adjusted from the current posture to the target posture according to the plantar force information.

It should be understood by those skilled in the art that embodiments of the present invention can be provided as methods, systems, or computer program products. Therefore, the present invention may take the form of a complete hardware embodiment, a complete software embodiment, or an embodiment combining software and hardware aspects. Furthermore, the present invention may take the form of a computer program product implemented on one or more computer usable storage media (including but not limited to magnetic disk storage, CD-ROM, optical storage, etc.) containing computer usable program codes therein.

The present invention is described with reference to flowcharts and/or block diagrams of methods, devices (systems), and computer program products according to embodiments of the present invention. It should be understood that each flow and/or block in a flowchart and/or block diagram, and combinations of flows and/or blocks in the flowchart and/or block diagram can be realized by computer program instructions. These computer program instructions may be provided to a processor of a general-purpose computer, a special-purpose computer, an embedded processor or other programmable data processing devices to produce a machine, so that the instructions executed by the processor of the computer or other programmable data processing devices produce means for implementing the functions specified in one or more flows of the flowcharts and/or one or more blocks of the block diagrams.

These computer program instructions can also be stored in a computer-readable memory that can direct a computer or other programmable data processing devices to work in a specific way, so that the instructions stored in the computer-readable memory produce a manufacturing article including instructions that implement the functions specified in one or more flows of the flowcharts and/or one or more blocks of the block diagrams.

These computer program instructions can also be loaded on a computer or other programmable data processing devices, so that a series of operation steps are executed on the computer or other programmable devices to produce a computer-implemented process, so that the instructions executed on the computer or other programmable devices provide steps for realizing the functions specified in one or more flows of the flowcharts and/or one or more blocks of the block diagrams.

In a typical configuration, a computing device includes one or more processors (CPUs), an input/output interface, a network interface, and a memory.

The memory may include a non-permanent memory, a random access memory (RAM) and/or a non-volatile memory in a computer-readable medium, such as a read-only memory (ROM) or a flash memory (RAM). The memory is an example of the computer-readable medium.

The computer-readable medium, including permanent and non-permanent, removable and non-removable media, can store information by any method or technology. The information can be computer-readable instructions, data structures, modules of programs or other data. Examples of the computer storage media include, but not limited to, phase change memory (PRAM), static random access memory (SRAM), dynamic random access memory (DRAM), other types of random access memory (RAM), read-only memory (ROM), electrically erasable programmable read-only memory (EEPROM), flash memory or other memory technologies, read-only optical disk read-only memory (CD-ROM), digital multi-function optical disk (DVD) or other optical storage optical storage, magnetic cassette tape, magnetic tape magnetic disk storage or other magnetic storage devices or any other non-transmission media, which can be used to store information that can be accessed by computing devices. As defined herein, the computer-readable media do not include temporary computer-readable media, such as modulated data signals and carrier waves.

It should be noted that in the present invention, relational terms such as "first" and "second" are only used to distinguish one entity or operation from another entity or operation, without necessarily requiring or implying any such actual relationship or sequence between these entities or operations. Moreover, the term "including", "comprising" or any other variation thereof is intended to cover non-exclusive inclusion, so that a process, method, article or equipment that includes a series of elements not only includes those elements, but also includes other elements not explicitly listed, or also includes elements inherent to such process, method, article or equipment. Without further restrictions, the elements defined by the statement "including a ......" does not exclude the existence of another identical element in the process, method, article or equipment that includes the elements.

The above merely describes specific embodiments of the present invention, to enable those skilled in the art to understand or realize the present invention. Many modifications to these embodiments will be apparent to those skilled in the art, and the general principles defined herein can be implemented in other embodiments without departing from the scope of the present invention. Therefore, the present invention is not to be limited to the embodiments herein, but will conform to the widest scope as defined by the appended claims.

**Claims**

1. A posture control method, applied to a legged robot and comprising:

   acquiring target posture data of the legged robot (S201, S301), wherein the target posture data is posture data corresponding to a target posture to which the legged robot needs to be adjusted;
   determining plantar force information of the legged robot according to the target posture data, with a friction cone formed between the legged robot and a contact surface in contact with a foot of the legged robot as a constraint condition (S202); and
   controlling the legged robot to be adjusted from a current posture to the target posture according to the plantar force information (S203, S304).

2. The posture control method according to claim 1, wherein:

   the plantar force information comprises a plantar force and a plantar force variation; and
   determining plantar force information of the legged robot according to the target posture data with a friction cone formed between the legged robot and a contact surface in contact with a foot of the legged robot as a constraint condition (S202) comprises:

      determining the plantar force of the legged robot according to the target posture data, with the friction cone formed between the legged robot and the contact surface in contact with the foot of the legged robot as the constraint condition (S302); and
      determining the plantar force variation according to differences between the target posture data and actual posture data (S303).

3. The posture control method according to claim 2, wherein determining the plantar force of the legged robot according to the target posture data with the friction cone formed between the legged robot and the contact surface in contact with the foot of the legged robot as the constraint condition (S302) comprises:

   constructing a dynamic model according to the target posture data;
   constructing a quadratic optimization relationship, with a minimum plantar force as an optimization objective and in combination with the dynamic model and the constraint condition of the friction cone; and
   determining the plantar force of the legged robot according to the quadratic optimization relationship.

4. The posture control method according to claim 2, wherein:

   the differences comprise a centroid position error, a centroid velocity error, a torso posture error, and a torso angular velocity error; and
   determining the plantar force variation according to differences between the target posture data and actual posture data (S303) comprises:

      linearizing a dynamic model and obtaining a linearized dynamic model, according to the centroid position error, the centroid velocity error, the torso posture error, the torso angular velocity error and an initial plantar force variation;
      constructing a linear quadratic adjustment relationship, with a minimum plantar force variation as an objective and in combination with the linearized dynamic model; and
      determining the plantar force variation according to the quadratic adjustment relationship.

5. The posture control method according to any one of claims 1-4, wherein controlling the legged robot to be adjusted from a current posture to the target posture according to the plantar force information (S203, S304) comprises:

   optimizing the plantar force information according to a linearized dynamic model and obtaining optimized plantar force information, with the friction cone formed between the legged robot and the contact surface in contact with the foot of the legged robot as the constraint condition;
determining a joint torque of each joint of the legged robot according to the optimized plantar force information; and
controlling the legged robot to be adjusted from the current posture to the target posture according to the joint torque.

6. The posture control method according to claim 5, wherein:

the plantar force information comprises a plantar force and a plantar force variation; and
optimizing the plantar force information according to a linearized dynamic model and obtaining optimized plantar force information with the friction cone formed between the legged robot and the contact surface in contact with the foot of the legged robot as the constraint condition, comprises:

optimizing the plantar force variation and obtaining an optimized plantar force variation, with a plantar force variation of a current control cycle and a plantar force variation of a previous control cycle as objectives and with the constraint condition of the friction cone and the linearized dynamic model as constraints; and obtaining the optimized plantar force information according to the optimized plantar force variation and the plantar force.

7. The posture control method according to claim 5, wherein determining a joint torque of each joint of the legged robot according to the optimized plantar force information comprises:
determining the joint torque of each joint of the legged robot according to the optimized plantar force information and a gravitational torque.

8. The posture control method according to any one of claims 1-7, wherein the target posture data comprises posture angles, and the posture angles comprise: a heading angle, a pitch angle, and a roll angle in a world coordinate system.

9. The posture control method according to claim 8, wherein a reference angular velocity of the legged robot is calculated according to the posture angles.

10. The posture control method according to any one of claims 1-9, wherein the target posture data comprises position coordinates, and the position coordinates refer to offset in three degrees of freedom in a world coordinate system.

11. The posture control method according to claim 10, wherein a reference acceleration of a center of mass of the legged robot is calculated according to the position coordinates.

12. A robot, comprising:

a processor; and
a memory configured to store instructions executable by the processor,
wherein the processor is configured to execute the instructions to implement the posture control method according to any one of claims 1 to 11.

13. The robot according to claim 12, wherein the robot is a two-legged robot or a four-legged robot.

14. A computer-readable storage medium, wherein instructions in the computer-readable storage medium are configured to enable a computer to implement the posture control method according to any one of claims 1 to 11.

15. A computer program product, comprising a computer program/instruction, wherein the posture control method according to any one of claims 1 to 11 is implemented in response to executing the computer program by a processor.

Fig. 1

Acquire target posture data of a legged robot, in which the target posture data is posture data corresponding to a target posture to which the legged robot needs to be adjusted — S201

Determine plantar force information of the legged robot according to the target posture data, with a friction cone formed between the legged robot and a contact surface in contact with a foot of the legged robot as a constraint condition — S202

Control the legged robot to be adjusted from a current posture to the target posture according to the plantar force information — S203

Fig. 2

Acquire target posture data of a legged robot, in which the target posture data is posture data corresponding to a target posture to which the legged robot needs to be adjusted — S301

Determine a plantar force of the legged robot according to the target posture data, with a friction cone formed between the legged robot and a contact surface in contact with a foot of the legged robot as a constraint condition — S302

Determine a plantar force variation according to differences between the target posture data and actual posture data — S303

Control the legged robot to be adjusted from a current posture to the target posture according to the plantar force and the plantar force variation — S304

Fig. 3

Robot posture control apparatus

Acquisition module — 41

Determination module — 42

Control module — 43

— 40

Fig. 4a

Determination module

First
determination
sub-module — 421

42

Second
determination
sub-module — 422

Fig. 4b

Control module

Optimization
sub-module — 431

43

Third
determination
sub-module — 432

Control sub-
module — 433

Fig. 4c

51

Memory

52

Processor

53

Power
component

54

Communication
component

Fig. 5

Europäisches
Patentamt

European
Patent Office

Office européen
des brevets

**EUROPEAN SEARCH REPORT**

Application Number

EP 22 21 6954

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | REHMAN BILAL UR ET AL: "Towards a multi-legged mobile manipulator", 2016 IEEE INTERNATIONAL CONFERENCE ON ROBOTICS AND AUTOMATION (ICRA), IEEE, 16 May 2016 (2016-05-16), pages 3618-3624, XP032908568, DOI: 10.1109/ICRA.2016.7487545 [retrieved on 2016-06-08] * III.A * * IV * * VI.A-B * | 1-5,7-15 | INV. B25J9/16 B62D57/032 B62D57/02 |
| X | Steven Robert Gray: "University of Pennsylvania ScholarlyCommons Publicly Accessible Penn Dissertations Motion Primitives and Planning for Robots with Closed Chain Systems and Changing Topologies Motion Primitives and Planning for Robots with Closed Chain Systems and Changing Topologies", , 1 January 2013 (2013-01-01), XP055701815, Retrieved from the Internet: URL:https://repository.upenn.edu/cgi/viewcontent.cgi?article=1915&context=edissertations * page 83 * * page 86 - page 95 * | 1-15 | |

TECHNICAL FIELDS SEARCHED (IPC)

B25J
G05D

-/--

The present search report has been drawn up for all claims

| Place of search | Date of completion of the search | Examiner |
|---|---|---|
| The Hague | 30 June 2023 | De Porcellinis, S |

EPO FORM 1503 03.82 (P04C01)

page 1 of 3

# EUROPEAN SEARCH REPORT

Application Number

EP 22 21 6954

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HENZE BERND ET AL: "Passivity-based whole-body balancing for torque-controlled humanoid robots in multi-contact scenarios", THE INTERNATIONAL JOURNAL OF ROBOTICS RESEARCH, vol. 35, no. 12, 19 July 2016 (2016-07-19), pages 1522-1543, XP93059702, Sage ISSN: 0278-3649, DOI: 10.1177/0278364916653815 Retrieved from the Internet: URL:http://journals.sagepub.com/doi/full-xml/10.1177/0278364916653815> * page 1522 – page 1533 * ----- | 1-5,7-15 | |
| X | LUDOVIC RIGHETTI ET AL: "Control of legged robots with optimal distribution of contact forces", HUMANOID ROBOTS (HUMANOIDS), 2011 11TH IEEE-RAS INTERNATIONAL CONFERENCE ON, IEEE, 26 October 2011 (2011-10-26), pages 318-324, XP032070289, DOI: 10.1109/HUMANOIDS.2011.6100832 ISBN: 978-1-61284-866-2 * the whole document * ----- | 1,12,14, 15 | TECHNICAL FIELDS SEARCHED (IPC) |

-/--

The present search report has been drawn up for all claims

| Place of search | Date of completion of the search | Examiner |
|---|---|---|
| The Hague | 30 June 2023 | De Porcellinis, S |

EPO FORM 1503 03.82 (P04C01)

Europäisches
Patentamt

European
Patent Office

Office européen
des brevets

# EUROPEAN SEARCH REPORT

**Application Number**

EP 22 21 6954

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RIGHETTI LUDOVIC ET AL: "Quadratic programming for inverse dynamics with optimal distribution of contact forces", 2012 12TH IEEE-RAS INTERNATIONAL CONFERENCE ON HUMANOID ROBOTS (HUMANOIDS 2012), IEEE, 29 November 2012 (2012-11-29), pages 538-543, XP032521354, ISSN: 2164-0572, DOI: 10.1109/HUMANOIDS.2012.6651572 [retrieved on 2013-10-31] * the whole document * ----- | 1,12,14, 15 | |
| X | CN 113 290 559 A (UBTECH ROBOTICS CORP) 24 August 2021 (2021-08-24) * the whole document * ----- | 1,12,14, 15 | |
| X | RIGHETTI LUDOVIC ET AL: "Optimal distribution of contact forces with inverse-dynamics control", THE INTERNATIONAL JOURNAL OF ROBOTICS RESEARCH, vol. 32, no. 3, 28 January 2013 (2013-01-28), pages 280-298, XP93059908, Sage ISSN: 0278-3649, DOI: 10.1177/0278364912469821 Retrieved from the Internet: URL:http://journals.sagepub.com/doi/pdf/10.1177/0278364912469821> * the whole document * ----- | 1,12,14, 15 | TECHNICAL FIELDS SEARCHED (IPC) |

The present search report has been drawn up for all claims

| Place of search | Date of completion of the search | Examiner |
|---|---|---|
| The Hague | 30 June 2023 | De Porcellinis, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 21 6954

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2023

| Patent document cited in search report | | Publication date | Patent family member(s) | | Publication date |
|---|---|---|---|---|---|
| CN 113290559 | A | 24-08-2021 | CN | 113290559 A | 24-08-2021 |
| | | | WO | 2022247170 A1 | 01-12-2022 |

EPO FORM P0459

For more details about this annex : see Official Journal of the European Patent Office, No. 12/82